# EUROPEAN PATENT APPLICATION

(11) **EP 4 765 736 A1**
(43) Date of publication of application: **24.06.2026**
(21) Application number: 24944454.8
(22) Date of filing: 23.12.2024
(51) Int. Cl.: H04L 9/40, H04L 69/163

(54) **SESSION ACCESS CONTROL METHOD AND APPARATUS, DEVICE, MEDIUM, AND PROGRAM PRODUCT**

(30) Priority: 25.06.2024 CN 202410833758
(71) Applicant: China Unionpay Co., Ltd., Shanghai 200135 (CN)
(72) Inventor: ZHOU, Jiajing, Shanghai 200135 (CN); LIU, Zhen, Shanghai 200135 (CN); ZHOU, Jien, Shanghai 200135 (CN)
(74) Representative: Kraeh, Christian
(86) International application number: PCT/CN2024/141360
(87) International publication number: WO 2026/000890

(57) **Abstract**

The present application relates to the field of data communications, and discloses a session access control method and apparatus, a device, a medium, and a program product. The method comprises: receiving a first data packet, wherein the first data packet includes a data packet transmitted upon establishment of a TCP communication session; on the basis of an IP address and port in the first data packet, a service port set, and a registered IP address set, determining a first ACL and/or a second ACL as a target ACL, wherein the service port set comprises an IP address and port of a registered communication device that serves as a server, or comprises an IP address and port of an unregistered communication device that serves as a server, the server is a receiver of the TCP communication session, the registered IP address set comprises the IP address of the registered communication device, the first ACL corresponds to a first session case of the registered communication device, and the second ACL corresponds to a second session case of the registered communication device; and executing an access control operation according to the target ACL.

## Description

### CROSS-REFERENCE TO RELATED APPLICATIONS

This application claims priority of Chinese Patent Application No. 202410833758.7, entitled "Method, Apparatus, Device, Media, and Program Product for Session Access Control", filed with the China National Intellectual Property Administration (CNIPA) on June 25, 2024, the entire content of which is incorporated herein by reference.

### FIELD OF THE DISCLOSURE

The present application generally relates to the technical field of data communication and, more particularly, relates to a method, an apparatus, a device, a medium, and a program product for session access control.

### BACKGROUND

Transmission control protocol (TCP) is a connection-oriented, reliable transport layer communication protocol. In the scenario where a client accesses a server, and the server provides services to the client, a TCP communication session may be established between the client and the server, thereby transmitting data packets. To improve network security, a firewall may be configured. The firewall, based on rules, inspects data packets between the client and the server and blocks packets that do not satisfy the rules, thereby implementing session access control. However, the firewall, based on packet inspection, cannot determine the TCP session directions of data packets. In some scenarios, for example, in the scenario that the device with Internet protocol (IP) address A1 is allowed to access the device with IP address A2 but the device with IP address A2 is not allowed to access the device with IP address A1, the access control rule suitable for such scenario may be not configured, which may make the session access control of the firewall unable to satisfy actual scenario requirements, thereby resulting in poor applicability.

### BRIEF SUMMARY OF THE DISCLOSURE

Embodiments of the present application provide a method, an apparatus, a device, a medium, and a program product for session access control, which may improve the applicability of firewalls.

For the first aspect, embodiments of the present application provide a session access control method, including: receiving a first data packet, where the first data packet includes a data packet transmitted after establishing a transmission control protocol (TCP) communication session; based on internet protocol (IP) addresses and ports, a service port set, and a registered IP address set in the first data packet, determining a preset first access control list (ACL) and/or a preset second ACL as a target ACL, where the service port set includes IP addresses and ports of registered communication devices configured as servers, or includes IP addresses and ports of unregistered communication devices configured as servers, a server is a receiver of the TCP communication session, the registered IP address set includes the IP addresses of the registered communication devices, the first ACL corresponds to a first session direction of a registered communication device, and the second ACL corresponds to a second session direction of the registered communication device; and executing an access control operation according to the target ACL.

For the second aspect, embodiments of the present application provide a session access control apparatus, including: a receiving module, configured to receive a first data packet, where the first data packet includes a data packet transmitted after establishing a transmission control protocol (TCP) communication session; an access-control-list determination module, configured to, based on internet protocol (IP) addresses and ports, a service port set, and a registered IP address set in the first data packet, determine a preset first access control list (ACL) and/or a preset second ACL as a target ACL, where the service port set includes IP addresses and ports of registered communication devices configured as servers, or includes IP addresses and ports of unregistered communication devices configured as servers, a server is a receiver of the TCP communication session, the registered IP address set includes the IP addresses of the registered communication devices, the first ACL corresponds to a first session direction of a registered communication device, and the second ACL corresponds to a second session direction of the registered communication device; and an access control module, configured to execute an access control operation according to the target ACL.

For the third aspect, embodiments of the present application provide a firewall device, including a processor and a memory storing computer program instructions; and when executing the computer program instructions, the processor implements the session access control method in the first aspect.

For the fourth aspect, embodiments of the present application provide a computer-readable storage medium; the computer-readable storage medium stores computer program instructions; and when executed by a processor, the computer program instructions implement the session access control method in the first aspect.

For the fifth aspect, embodiments of the present application provide a computer program product, including a computer program; and when executed by a processor, the computer program implements the session access control method in the first aspect.

The present application provides a method, an apparatus, a device, a medium, and a program product for session access control. Corresponding ACLs may be configured for different session directions of the TCP communication session; the firewall device may receive data packets transmitted after the TCP communication session is established; and according to the service port set of the ports and the IP addresses of the communication devices of the server recorded (that is, the receiver in the TCP communication session), the session direction of the TCP communication session which the data packet belongs to may be determined, thereby determining the ACL corresponding to the session direction and executing access control operation according to the ACL corresponding to the session direction. Through the service port set and the registered IP address set, the packet-inspection-based firewall device may also identify the session direction of the TCP communication session, such that access control rules suitable for various scenarios may be configured, and the session access control of the firewall may satisfy actual scenario requirements, thereby improving the applicability of the firewall.

### BRIEF DESCRIPTION OF THE DRAWINGS

To clearly illustrate the technical solutions in embodiments of the present application, accompanying drawings, which are required to be used in embodiments of the present application, are briefly described hereinafter; and for those skilled in the art, other accompanying drawings may be obtained from such accompanying drawings without any creative effort.
FIG. 1 illustrates an exemplary architecture schematic of an application scenario of a session access control method provided in embodiments of the present application.
FIG. 2 illustrates another exemplary architecture schematic of an application scenario of a session access control method provided in embodiments of the present application.
FIG. 3 illustrates a flowchart of a session access control method provided in embodiments of the present application.
FIG. 4 illustrates another flowchart of a session access control method provided in embodiments of the present application.
FIG. 5 illustrates another flowchart of a session access control method provided in embodiments of the present application.
FIG. 6 illustrates an exemplary architecture schematic of a cloud firewall provided in embodiments of the present application.
FIG. 7 illustrates a structural schematic of a session access control apparatus provided in embodiments of the present application.
FIG. 8 illustrates a structural schematic of a firewall device provided in embodiments of the present application.

### DETAILED DESCRIPTION

The following describes the features and exemplary embodiments of various aspects of the present application in detail. To make the objectives, technical solutions, and advantages of the present application clearer, the present application is further described in detail with reference to accompanying drawings and specific embodiments. It should be understood that specific embodiments described herein are intended only to explain the present application and are not intended to limit the present application. For those skilled in the art, the present application may be implemented without some of such specific details. The following description of embodiments is intended merely to provide a better understanding of the present application by illustrating examples of the present application. It should be noted that acquisition, storage, use, and processing of information and data in embodiments of the present application are authorized by users or relevant authorities, which may comply with relevant national laws and regulations.

TCP is a connection-oriented, reliable transport layer communication protocol. In the scenario where a client accesses a server, and the server provides services to the client, a TCP communication session may be established between the client and the server, thereby transmitting data packets. To improve network security, a firewall may be configured. The firewall, based on rules, inspects data packets between the client and the server and blocks packets that do not satisfy the rules, thereby implementing session access control. However, the firewall, based on packet inspection, cannot determine the TCP session directions of data packets, such that access control rules satisfying certain scenario requirements cannot be configured, and the session access control of the firewall cannot to satisfy actual scenario requirements. For example, in the scenario that the device with IP A1 is allowed to access the device with IP address A2 but the device with IP address A2 is not allowed to access the device with IP address A1, the access control rule suitable for such scenario may be not configured, which may make the session access control of the firewall unable to satisfy actual scenario requirements, thereby resulting in poor applicability.

To improve the adaptability of session access control of the firewall, stateful inspection firewall may be used for session access control. The stateful inspection firewall may record TCP communication sessions through a session table, and all messages belonging to same connection exchanged between two communicating parties may be treated as an entire data stream, thereby identifying session direction. However, the session table requires an extremely large amount of storage space occupied. When the number of sessions recorded in the session table reaches a certain level, such as 200,000 sessions, the query and maintenance time of the session table may increase significantly, which may reduce the performance of session access control. Furthermore, TCP communication sessions are long connections, and data exchange interval durations between sessions may be relatively long. Attackers may continuously establish TCP communication sessions with a target server without releasing corresponding TCP connections, such that the number of sessions in the session table maintained by the stateful inspection firewall may easily reach the upper limit, and the stateful inspection firewall may be vulnerable to malicious attacks.

The present application provides a method, an apparatus, a device, a medium, and a program product for session access control. On the basis of the packet-inspection-based firewall, corresponding Access Control Lists (ACLs) may be configured for different session directions; and according to the service port set of the IP addresses and the ports of the communication devices of the server recorded (that is, the receiver in the TCP communication session), the session direction of the TCP communication session which the data packet belongs to may be determined, thereby determining the ACL corresponding to the session direction and executing access control operation according to the ACL. Session direction identification may enable setting separate ACLs for different session directions, and access control rules suitable for various scenarios may be configured, such that the session access control of the firewall may satisfy actual scenario requirements, thereby improving the applicability of the firewall. Furthermore, packet-inspection-based firewalls may not require session tables; and compared to session tables, service port sets may occupy significantly less storage space. In addition, even if a network attacker continuously establishes TCP connections with the target server, the target server's IP address and port remain unchanged; therefore, the service port table may not record each established TCP communication connection according to different IP addresses and ports, and the number of records in the service port set has always remained at a low level, thereby ensuring communication performance and preventing the firewall from being damaged by malicious attacks.

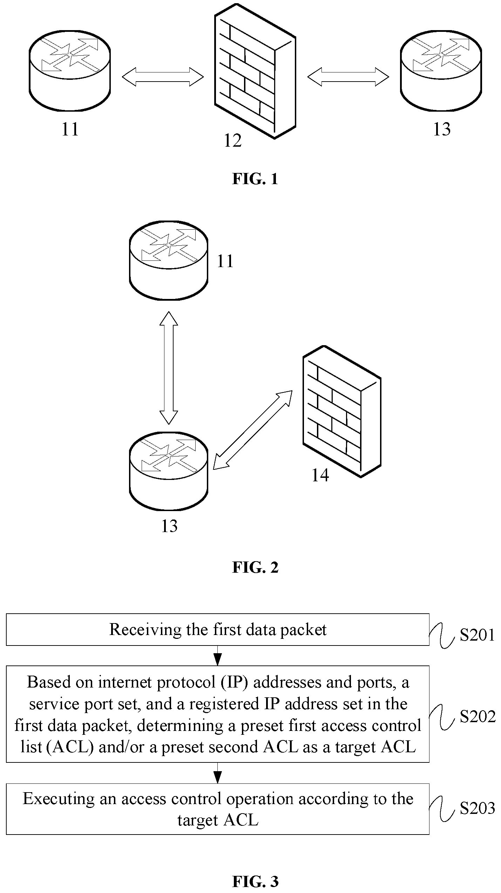

For ease of understanding, firstly, the application scenario of the session access control method provided in embodiments of the present application is briefly described herein. FIG. 1 illustrates an exemplary architecture schematic of an application scenario of a session access control method provided in embodiments of the present application. As shown in FIG. 1, a communication device 11 communicates with a communication device 13 through a firewall device 12; the firewall device 12 is a firewall device serially connected between the communication device 11 and the communication device 13; and the firewall device 12 may execute the session access control method in embodiments of the present application.

FIG. 2 illustrates another exemplary architecture schematic of an application scenario of a session access control method provided in embodiments of the present application. As shown in FIG. 2, the communication device 11 communicates with the communication device 13; a firewall device 14 is a bypass firewall device for the communication device 11 and the communication device 13; and the firewall device 14 may execute the session access control method in embodiments of the present application. The communication device 11 and the communication device 13 in FIG. 1 are merely exemplary; and in actual application scenarios, more communication devices may be included, which may be not limited herein.

A method, an apparatus, a device, a medium, and a program product for session access control provided in the present application are respectively described hereinafter.

The first aspect of the present application provides a session access control method, which may be applied to session access control scenarios of firewalls or other scenarios. Such session access control method may be executed by a session access control apparatus, device and the like; and the session access control apparatus may be implemented as a firewall device, firewall system and the like, which may be not limited herein. FIG. 3 illustrates a flowchart of a session access control method provided in embodiments of the present application. As shown in FIG. 3, such session access control method may include step S201 to step S203.

In step S201, the first data packet may be received.

The first data packet may include the data packet transmitted after the TCP communication session is established; that is, the data packet transmitted between two communication devices after the TCP communication session is established may be called the first data packet.

In step S202, based on the network protocol IP addresses and the ports in the first data packet, the service port set, and the registered IP address set, the preset first access control list (ACL) and/or the preset second ACL may be determined as the target ACL.

The first data packet may include the IP addresses and the ports. Specifically, the first data packet may include a source IP address, a source port, a destination IP address, and a destination port. The source IP address and the source port are the IP address and the port of the sender of the first data packet; and the destination IP address and the destination port are the IP address and the port of the receiver of the first data packet. Based solely on the first data packet, the transmission direction of the first data packet may be determined, but the session direction of the TCP communication session which the first data packet belongs to cannot be determined. In the TCP communication session, the initiator of the TCP communication session may be the sender of the first data packet and may also be the receiver of the first data packet; similarly, the receiver of the TCP communication session may be the sender of the first data packet and may be also the receiver of the first data packet.

For ease of explanation, in embodiments of the present application, the receiver of the TCP communication session is referred to as the server, and the initiator of the TCP communication session is referred to as the client. It should be noted that a communication device may have different roles in different TCP communication sessions. For example, a communication device may be the server in one TCP communication session and may be the client in another TCP communication session. The service port set is a dynamically changing set and may be implemented in the form of a table. For example, the service port set may be implemented in the form of a service port table. The service port set may include the IP addresses and ports of communication devices which are registered and configured as servers. Or the service port set may include the IP addresses and ports of communication devices which are not registered and configured as servers. The registered IP address set may include the IP addresses of registered communication devices. Registered communication devices may be communication devices registered with the firewall; that is, registered communication devices may be communication devices protected by the firewall.

In embodiments of the present application, the ACL may include the first ACL and the second ACL; the first ACL may correspond to the first session direction of the registered communication device; and the second ACL may correspond to the second session direction of the registered communication device. The first ACL includes access control rules configured for the first session direction of the registered communication device. The second ACL includes access control rules configured for the second session direction of the registered communication device. The first session direction is the opposite of the second session direction. For example, for a registered communication device, the session direction of the registered communication device as the server in the TCP communication session is the first session direction, and the session direction of the registered communication device as the client in the TCP communication session is the second session direction. By configuring the first ACL and the second ACL, various practical scenario requirements may be satisfied. For example, above-mentioned related technologies cannot configure the scenario that the communication device with IP address A1 is allowed to access the communication device with IP address A2 but the communication device with IP address A2 is not allowed to access the communication device with IP address A1; in embodiments of the present application, access control rules allowing the communication device with IP address A1 to access the communication device with IP address A2 may be configured in the first ACL, and access control rules not allowing the communication device with IP address A2 to access the communication device with IP address A1 may be configured in the second ACL, thereby satisfying the configuration requirements of such scenario.

Through whether the IP address and the port in the first data packet are recorded in the service port set and whether the IP address in the first data packet is recorded in the registered IP address set, whether the communication device of the sender and the communication device of the receiver of the first data packet are configured as the server or the client may be determined; and through whether the communication device of the sender and the communication device of the receiver of the first data packet are registered communication devices, the session direction of the registered communication devices may be determined, which may implement identification of the session direction of the TCP communication session by the firewall device based on packet inspection. Once the session direction of current TCP communication session is determined, the first ACL or the second ACL corresponding to the session direction of current TCP communication session can be identified as the target ACL.

In step S203, the access control operation may be executed according to the target ACL.

After determining the target ACL, the access control operation may be executed according to the access control rules in the target ACL. The target ACL may include the first ACL and/or the second ACL. The target ACL may belong to the ACL; ACL may include deny access rules and/or allow access rules; deny access rules may include communication rules characterizing deny access; and allow access rules may include rules characterizing allow access. For example, the rules of the first ACL are shown in Table 1 below:

**Table 1**

| No. | Source IP Address | Source Port | Destination IP Address | Destination Port | Action |
|---|---|---|---|---|---|
| 2 | Cloud_IP_A | ANY | Cloud_IP_B | 80 | Deny access |
| 0 | ANY | ANY | Cloud_IP_B | 80 | Allow access |

Where, the access control rule with number 2 is a deny access rule which characterizes that the communication device with IP address Cloud_IP_A is denied from accessing the port 80 of the communication device with IP address Cloud_IP_B through any port; and the access control rule with number 0 is an allow access rule which characterizes that the communication device with any IP address is allowed to access the port 80 of the communication device with IP address Cloud_IP_B through any port.

When the ACL includes the deny access rules, if the first data packet is consistent with any one of deny access rules, the TCP communication session which the data packet belongs to is blocked. If the first data packet is consistent with any of deny access rules, it indicates that the TCP communication session which the first data packet belongs to is denied, and such TCP communication session should be blocked. When the ACL includes the allow access rules, in if the first data packet is not consistent with any one of allow access rules, the TCP communication session which the data packet belongs to is blocked. If the first data packet is consistent with the allow access rule, it indicates that the TCP communication session which the first data packet belongs to is allowed, and such TCP communication session may continue. If the first data packet is not consistent with any one of allow access rules, it indicates that the TCP communication session which the first data packet belongs to is denied, and such TCP communication session should be blocked. Specifically, blocking the TCP communication session which the first data packet belongs to may be implemented as, but may be not limited to, the firewall device respectively sending a session termination data packet to both the communication device of the initiator and the communication device of the receiver of the TCP communication session which the first data packet belongs to, thereby terminating the TCP communication session which the first data packet belongs to and blocking the TCP communication session.

In embodiments of the present application, corresponding ACLs may be configured for different session directions of the TCP communication session; the firewall device may receive data packets transmitted after the TCP communication session is established; and according to the service port set of the ports and the IP addresses of the communication devices of the server recorded (that is, the receiver in the TCP communication session), the session direction of the TCP communication session which the data packet belongs to may be determined, thereby determining the ACL corresponding to the session direction and executing access control operation according to the ACL corresponding to the session direction. Through the service port set and the registered IP address set, the packet-inspection-based firewall device may also identify the session direction of the TCP communication session, such that access control rules suitable for various scenarios may be configured, and the session access control of the firewall may satisfy actual scenario requirements, thereby improving the applicability of the firewall. Furthermore, the service port set configured by the packet-inspection-based firewall may occupy significantly small storage space, and the maintenance time and query time may be significantly short, which may ensure the performance of session access control. Even if a network attacker launches network attack by continuously establishing TCP communication sessions, the number of IP addresses and ports recorded in the service port set may remain at a relatively low level, which may adapt to high-concurrency scenarios and preventing the firewall from being maliciously damaged, thereby improving the security of session access control.

In some embodiments, the session direction of the registered communication device in the TCP communication session may be determined first, and the target ACL may be determined based on the session direction. Step S202 mentioned above may be further specifically refined as follows: the session direction of the registered communication device in the TCP communication session may be determined based on whether the service port set includes the IP address and the port in the first data packet, and whether the registered IP address set includes the IP address in the first data packet; and based on the session direction of the registered communication device in the TCP communication session, the first ACL and/or the second ACL may be determined as the target ACL.

Whether the registered communication device is the server or the receiver in such TCP communication session may be determined based on whether the service port set includes the IP address and the port in the first data packet and whether the registered IP address set includes the IP address in the first data packet, thereby determining the session direction of the registered communication device in the TCP communication session; and the session direction of the registered communication device in the TCP communication session may be considered as the session direction of the TCP communication session. The first data packet may include two sets of IP addresses and ports; one set of IP address and port may be the source IP address and the source port; and another set of IP address and port may be the destination IP address and the destination port.

In some embodiments, the service port set may include the IP addresses and ports of the communication devices which are registered and configured as servers; that is, the service port set may record the IP addresses and ports of the communication devices which are protected by firewall devices and configured as servers. If the service port set includes a set of IP address and port in the first data packet, and if the registered IP address set includes the IP address from such set of IP address and port, the session direction of the registered communication device in the TCP communication session may be determined to include the first session direction. The service port set may include a set of IP address and port in the first data packet, which may implement that the service port set includes the source IP address and the source port in the first data packet, or the service port set includes the destination IP address and the destination port in the first data packet. The service port set includes a set of IP address and port in the first data packet, and the registered IP address set also includes the IP address from such set and the IP address in the port, which may indicate that the registered communication device in such TCP communication session is the server, and the unregistered communication device in such TCP communication session is the client. For such scenario, it may be considered that the unregistered communication device initiates the TCP communication session to the registered communication device; that is, the session direction of the TCP communication session where the registered communication device is configured as the server is the first session direction. If the service port set does not include any set of IP addresses and ports in the first data packet, and if the registered IP address set includes the IP address in a set of IP address and port in the first data packet, the session direction of the registered communication device in the TCP communication session may be determined to include the second session direction. The service port set may not include any set of IP addresses and ports in the first data packet; that is, the service port set may not include the source IP address and the source port in the first data packet or also may not include the destination IP address and the source port in the first data packet. The service port set may not include any set of IP addresses and ports in the first data packet, and the registered IP address set may include the IP addresses in the set of IP addresses and ports in the first data packet, which may indicate that the registered communication device in such TCP communication session is the client, and the unregistered communication device in such TCP communication session is the server. For such scenario, it may be considered that the registered communication device initiates the TCP communication session to the unregistered communication device; that is, the session direction of the TCP communication session where the registered communication device configured as the client is the second session direction. If the service port set includes a set of IP address and port in the first data packet and if the registered IP address set includes the IP addresses from two sets of IP addresses and ports in the first data packet, the session direction of the registered communication device in the TCP communication session may be determined to include both the first session direction and the second session direction. The service port set may include a set of IP address and port in the first data packet, which may implement that the service port set includes the source IP address and the source port in the first data packet, or the service port set includes the destination IP address and the destination port in the first data packet. The service port set may include a set of IP address and port from the first data packet, and the registered IP address set may include the IP addresses from two sets of IP addresses and ports in the first data packet, which may indicate that two communication devices involved in such TCP communication session are registered communication devices. One registered communication device in such TCP communication session may be the server, and another registered communication device in such TCP communication session may be the client. For such scenario, it may be considered that the registered communication device initiates the TCP communication session to another registered communication device; for the registered communication device configured as the server, the session direction of the TCP communication session is the first session direction; and for the registered communication device configured as the client, the session direction of the TCP communication session is the second session direction. Therefore, the session direction of the TCP communication session for such two registered communication devices may be both the first session direction and the second session direction.

In some embodiments, the service port set may include the IP addresses and ports of unregistered communication devices which are configured as servers; that is, the service port set may record the IP addresses and ports of the communication devices which are not protected by firewall devices and configured as servers. If the service port set includes a set of IP address and port in the first data packet and if the registered IP address set does not include the IP addresses in such set of IP address and port, the session direction of the registered communication device in the TCP communication session may be determined to include the second session direction. The service port set may include a set of IP address and port in the first data packet, which may implement that the service port set includes the source IP address and the source port in the first data packet, or the service port set includes the destination IP address and the destination port in the first data packet. The service port set may include a set of IP address and port in the first data packet, and the registered IP address set may not include the IP addresses in such set of IP address and port, which may indicate that the unregistered communication device in the TCP communication session is the server, and the registered communication device in the TCP communication session is the client. For such scenario, it may be considered that the registered communication device initiates the TCP communication session to the unregistered communication device; that is, the session direction of the TCP communication session where the registered communication device is configured as the client may be the second session direction. If the service port set does not include any set of IP addresses and ports in the first data packet and if the registered IP address set includes the IP address in a set of IP address and port in the first data packet, the session direction of the registered communication device in the TCP communication session may be determined to include the first session direction. The service port set does not include any set of IP addresses and ports in the first data packet; that is, the service port set does not include the source IP address and the source port in the first data packet; and does not include the destination IP address and the source port in the first data packet. The service port set does not include any set of IP addresses and ports in the first data packet, and the registered IP address set includes the IP address in a set of IP address and port in the first data packet, which may indicate that the registered communication device in such TCP communication session is the server, and the unregistered communication device in such TCP communication session is the client. For such scenario, it may be considered that the unregistered communication device initiates the TCP communication session to the registered communication device; that is, the session direction of the TCP communication session where the registered communication device is configured as the server may be the first session direction. If the service port set does not include any set of IP addresses and ports in the first data packet and if the registered IP address set includes the IP addresses in two sets of IP addresses and ports in the first data packet, the session direction of the registered communication device in the TCP communication session may be determined to include the first session direction and the second session direction. The service port set does not include any set of IP addresses and ports in the first data packet; that is, the service port set does not include the source IP address and the source port in the first data packet and also does not include the destination IP address and the source port in the first data packet. The service port set does not include any set of IP addresses and ports in the first data packet, and the registered IP address set includes the IP addresses from two sets of IP addresses and ports in the first data packet, which may indicate that both communication devices involved in such TCP communication session are registered communication devices. One registered communication device in such TCP communication session may be the server, and another registered communication device in such TCP communication session may be the client. For such scenario, it may be considered that one registered communication device initiates the TCP communication session with another registered communication device. For the registered communication device configured as the server, the session direction of the TCP communication session may be the first session direction; and for the registered communication device configured as the client, the session direction of the TCP communication session may be the second session direction. Therefore, the session direction of the TCP communication session for such two registered communication devices may be the first session direction and the second session direction.

When the session direction of the registered communication device in the TCP communication session includes the first session direction, the first ACL may be determined as the target ACL. When the session direction of the registered communication device in the TCP communication session includes the second session direction, the second ACL may be determined as the target ACL. When the session direction of the registered communication device in the TCP communication session includes the first session direction and the second session direction, the first ACL and the second ACL may be determined as the target ACL.

In some embodiments, two communication devices need to perform a three-way handshake to establish the TCP communication session. During the establishment of the TCP communication session, the firewall device may still detect the data packets transmitted during the establishment process of the TCP communication session to implement session access control. The following describes session access control during the establishment process of the TCP communication session, respectively using the example of the service port set including the IP addresses and ports of the registered communication device which is configured as the server, and using the example of the service port set including the IP addresses and ports of the unregistered communication device which is configured as the server.

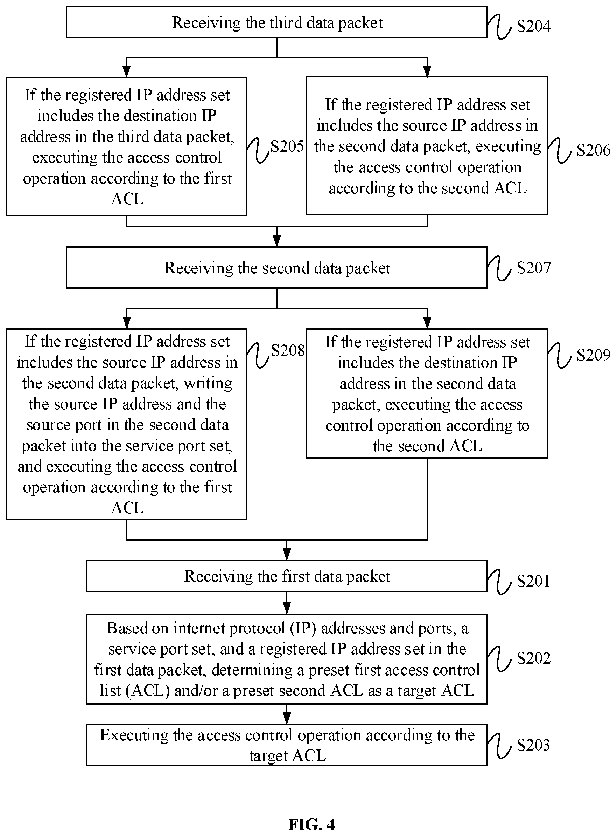

FIG. 4 illustrates another flowchart of a session access control method provided in embodiments of the present application. FIG. 4 shows the session access control method when the service port set includes the IP addresses and ports of the registered communication device which is configured as a server. The difference between FIG. 4 and FIG. 3 is that the session access control method shown in FIG. 4 may further include step S204 to step S209.

In step S204, the third data packet may be received.

The third data packet is the packet transmitted during the first handshake in the process of establishing the TCP communication session. The third data packet may include a request identifier; the data packet may be identified as the third data packet through the request identifier; the third data packet may also be called a synchronize packet, or simply a SYN packet; and the request identifier may include a SYN identifier. The third data packet may include the source IP address and the source port, and the destination IP address and the destination port. Since the third data packet is the packet transmitted during the first handshake in the process of establishing the TCP communication session, the communication device of the sender of the third data packet is the client of the TCP communication session, and the communication device of the receiver of the third data packet is the server of the TCP communication session. Correspondingly, the source IP address and the source port in the third data packet are the IP address and the port of the client of the TCP communication session; and the destination IP address and the destination port **in** the third data packet are the IP address and the port of the server of the TCP communication session.

In step S205, if the registered IP address set includes the destination IP address in the third data packet, the access control operation may be executed according to the first ACL.

The registered IP address set includes the destination IP address in the third data packet, which may indicate that the registered communication device is the server of such TCP communication session; the session direction of the registered communication device in the TCP communication session may include the first session direction; and the access control operation may be executed according to the first ACL corresponding to the first session direction.

In step S206, if the registered IP address set includes the source IP address in the second data packet, the access control operation may be executed according to the second ACL.

The registered IP address set includes the source IP address in the third data packet, which may indicate that the registered communication device is the client of such TCP communication session; the session direction of the registered communication device in the TCP communication session may include the second session direction; and the access control operation may be executed according to the second ACL corresponding to the second session direction.

It should be noted that if the registered IP address set includes the source IP address and the destination IP address in the second data packet, it may indicate that in such TCP communication session, one registered communication device may be configured as the server, and another registered communication device may be configured as the client. The session direction of one registered communication device may be the first session direction, and the session direction of another registered communication device may be the second session direction; that is, the session directions of the registered communication devices in the TCP communication session may include the first session direction and the second session direction, and the access control operation may be executed according to the first ACL and the second ACL.

Through the third data packet and the registered IP address set, the session direction of the TCP communication session may be determined, and the access control operation may be further executed to ensure the security of session access control during the establishment of the TCP communication session.

In step S207, the second data packet may be received.

The second data packet is the data packet transmitted during the second handshake in the process of establishing the TCP communication session. The second data packet may include a request and confirmation identifier; the data packet may be identified as the second data packet through the request and confirmation identifier; and the second data packet may also be called a SYN/ACK data packet or a SYN+ACK data packet. The request and confirmation identifiers may include a SYN/ACK identifier. The second data packet may include the source IP address and the source port, and the destination IP address and the destination port. Since the second data packet is transmitted during the second handshake in the processing of establishing the TCP communication session, the communication device of the sender of the second data packet is the server of such TCP communication session, and the communication device of the receiver of the second data packet is the client of such TCP communication session. Correspondingly, the source IP and the source port in the second data packet are the IP address and the port of the server of such TCP communication session; and the destination IP address and the destination port in the second data packet are the IP address and the port of the client of such TCP communication session.

In step S208, if the registered IP address set includes the source IP address in the second data packet, the source IP address and the source port in the second data packet may be written into the service port set, and the access control operation may be executed according to the first ACL.

The registered IP address set may include the source IP address in the second data packet, which may indicate that the communication device corresponding to the source IP address in the second data packet is a registered communication device, and such registered communication device is the server in such TCP communication session. Therefore, the source IP address and the source port in the second data packet may be written into the service port set, which may ensure that the service port set records the IP addresses and ports of all registered communication devices which are configured as servers, thereby being convenient for that after the TCP communication session is established, the service port set is configured to determine the session direction of the TCP communication session which the subsequent first data packet belongs to. Such registered communication device may be the server in such TCP communication session; the session direction of the registered communication device in the TCP communication session may include the first session direction; and the access control operation may be executed according to the first ACL corresponding to the first session direction.

In step S209, if the registered IP address set includes the destination IP address in the second data packet, the access control operation may be executed according to the second ACL.

The registered IP address set includes the destination IP address in the second data packet, which may indicate that the communication device corresponding to the destination IP address in the second data packet is a registered communication device; such registered communication device is the client in such TCP communication session; and there is no need to write the source IP address and the source port in the second data packet into the service port set. Such registered communication device may be configured as the client in such TCP communication session; the session direction of the registered communication device in the TCP communication session may include the second session direction; and the access control operation may be executed according to the second ACL corresponding to the second session direction.

In some embodiments, if the registered IP address set includes the destination IP address in the second data packet but not the source IP address and if the service port set includes the destination IP address and the destination port in the second data packet, the destination IP address and the destination port in the second data packet may be deleted from the service port set. The registered IP address set includes the destination IP address in the second packet but does not include the source IP address, which may indicate that the registered communication device is the client in such TCP communication session. If the service port set includes the destination IP address and the destination port in the second packet at this point, it's possible that the registered communication device was the server in a previously established TCP communication session. To prevent the previously established TCP communication session from affecting current TCP communication session, the destination IP address and the destination port in the second packet may be deleted from the service port set, which may prevent the registered communication device from being considered the server in the current TCP communication session.

It should be noted that if the registered IP address set includes the source IP address and the destination IP address in the second packet, it may indicate that in such TCP communication session, one registered communication device is configured as the server, and another registered communication device is configured as the client. The session direction of one registered communication device may be the first session direction, and the session direction of another registered communication device may be the second session direction; that is, the session directions of the registered communication devices in the TCP communication session may include the first session direction and the second session direction, and the access control operation may be executed according to the first ACL and the second ACL.

During the second handshake process of establishing the TCP communication session, the service port set may be dynamically updated, thereby being convenient for that the session direction of the TCP communication session which the first data packet transmitted belongs to may be accurately determined, the correct ACL may be selected, and the security of session access control may be improved.

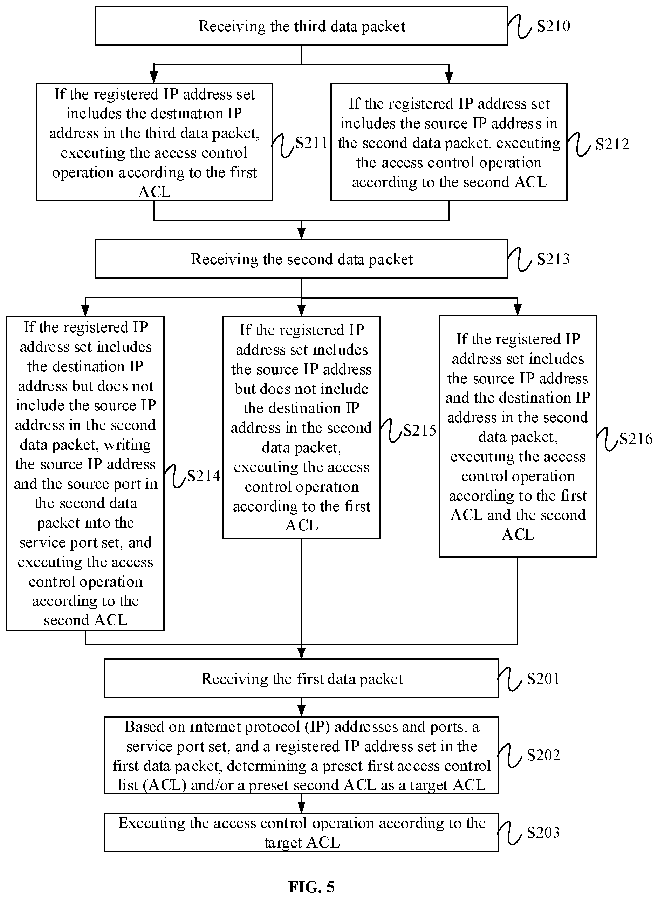

FIG. 5 illustrates another flowchart of a session access control method provided in embodiments of the present application. FIG. 5 shows the session access control method when the service port set includes the IP address and the port of the unregistered communication device which is configured as the server. The difference between FIG. 5 and FIG. 3 is that the session access control method shown in FIG. 4 may further include step S210 to step S216.

In step S210, the third data packet may be received.

In step S211, if the registered IP address set includes the destination IP address in the third data packet, the access control operation may be executed according to the first ACL.

In step S212, if the registered IP address set includes the source IP address in the second data packet, the access control operation may be executed according to the second ACL.

In step S213, the second data packet may be received.

The second data packet may include the request and confirmation identifier. The second data packet may include the source IP address and the source port, and the destination IP address and the destination port.

The specific description of step S210 to step S213 may be basically same as the specific description of step S204 to step S207 in above-mentioned embodiments, which may refer to relevant description mentioned above and may not be described in detail herein.

In step S214, if the registered IP address set includes the destination IP address in the second data packet but does not include the source IP address, the source IP address and the source port in the second data packet may be written into the service port set, and the access control operation may be executed according to the second ACL.

The registered IP address set includes the destination IP address in the second data packet but does not include the source IP address, which may indicate that the communication device corresponding to the destination IP address in the second data packet is the registered communication device, and the communication device corresponding to the source IP address in the second data packet is the unregistered communication device; and the registered communication device is the client in such TCP communication session, and the unregistered communication device is the server in such TCP communication session. Therefore, the source IP address and the source port in the second data packet may be written into the service port set, which may ensure that the service port set records the IP addresses and ports of all unregistered communication devices which are configured as servers, thereby being convenient for that after the TCP communication session is established, the service port set may be configured to determine the session direction of the TCP communication session which subsequent first data packet belongs to. The registered communication device may be configured as the client in such TCP communication session; the session direction of the registered communication device in the TCP communication session may include the second session direction; and the access control operation may be executed according to the second ACL corresponding to the second session direction.

In step S215, if the registered IP address set includes the source IP address in the second data packet but does not include the destination IP address, the access control operation may be executed according to the first ACL.

The registered IP address set includes the source IP address in the second data packet but does not include the destination IP address, which may indicate that the communication device corresponding to the source IP address in the second data packet is a registered communication device, and the communication device corresponding to the destination IP address in the second data packet is an unregistered communication device. The registered communication device may be the server in such TCP communication session, and the unregistered communication device may be the client in such TCP communication session. Therefore, it is no need to write the destination IP address and the destination port in the second data packet into the service port set. The registered communication device may be the server in such TCP communication session; the session direction of the registered communication device **in** the TCP communication session may include the first session direction; and the access control operation may be executed according to the first ACL corresponding to the first session direction.

In some embodiments, if the registered IP address set includes the source IP address in the second data packet but does not include the destination IP address and if the service port set includes the destination IP address and the destination port in the second data packet, the destination IP address and the destination port in the second data packet may be deleted from the service port set. The registered IP address set includes the source IP address in the second data packet but does not include the destination IP address, which may indicate that the unregistered communication device is the client in such TCP communication session. If the service port set includes the destination IP address and the destination port in the second data packet at this point, it's possible that the unregistered communication device was the server in a previously established TCP communication session. To prevent the previously established TCP communication session from affecting current TCP communication session, the destination IP address and the destination port in the second packet may be deleted from the service port set, which may prevent the registered communication device from being considered the server in the current TCP communication session.

In step S216, if the registered IP address set includes the source IP address and the destination IP address in the second data packet, the access control operation may be executed according to the first ACL and the second ACL.

The registered IP address set includes the source IP address and the destination IP address in the second data packet, which may indicate that in such TCP communication session, one registered communication device is configured as the server, and another registered communication device is configured as the client. In the TCP communication session, the session direction of one registered communication device may be the first session direction, and the session direction of another registered communication device maybe the second session direction; that is, the session directions of the registered communication devices in the TCP communication session may include the first session direction and the second session direction, and the access control operation may be executed according to the first ACL and the second ACL.

During the second handshake process of establishing the TCP communication session, the service port set may be dynamically updated, thereby being convenient for that the session direction of the TCP communication session which the first data packet transmitted belongs to may be accurately determined, the correct ACL may be selected, and the security of session access control may be improved.

In above-mentioned embodiments, when the ACL includes the deny access rules, if the second data packet is consistent with any of the deny access rules, the TCP communication session which the second data packet belongs to may be blocked; when the ACL includes the allow access rule, if the second data packet is not consistent with any of the allow access rules, the TCP communication session which the second data packet belongs to may be blocked. When the ACL includes the deny access rules, if the third data packet is consistent with any of the deny access rules, the TCP communication session which the third data packet belongs to may be blocked. When the ACL includes the allow access rules, if the third data packet is not consistent with any of the allow access rules, the TCP communication session which the third data packet belongs to may be blocked. Specific description refers to above-mentioned description of blocking the TCP communication session which the first data packet belongs to, which may be not described in detail herein.

It should be noted that the session direction of the registered communication device in the TCP communication session mentioned in embodiments of the present application may specifically include the session direction of the port of the registered communication device in the TCP communication session.

In some embodiments, a port of the communication device may be configured as both the client and the server simultaneously, that is, the session direction of the registered communication device may include both the first session direction and the second session direction. For such scenario, a predetermined access control strategy may be executed. The predetermined access control strategy may include executing the access control operation according to the first ACL; or executing the access control operation according to the second ACL; or executing the access control operation according to the first ACL and the second ACL. The predetermined access control strategy may include executing the access control operation according to the first ACL, which may indicate that the port of the communication device configured as both the client and the server is forcibly marked as the server. The predetermined access control strategy may include executing the access control operation according to the second ACL, which may indicate that the port of the communication device configured as both the client and the server is forcibly marked as the client. The predetermined access control strategy may further include executing the access control operation according to the first ACL and the second ACL, which may indicate that the port of the communication device configured as both the client and the server is forcibly marked as the client and the server. Such forced marking behavior may be executed in advance or when a port of the communication device is detected to be configured as both the client and the server, which may be not limited herein. The predetermined access control strategy may also be adjusted and updated according to scenarios, requirements and the like.

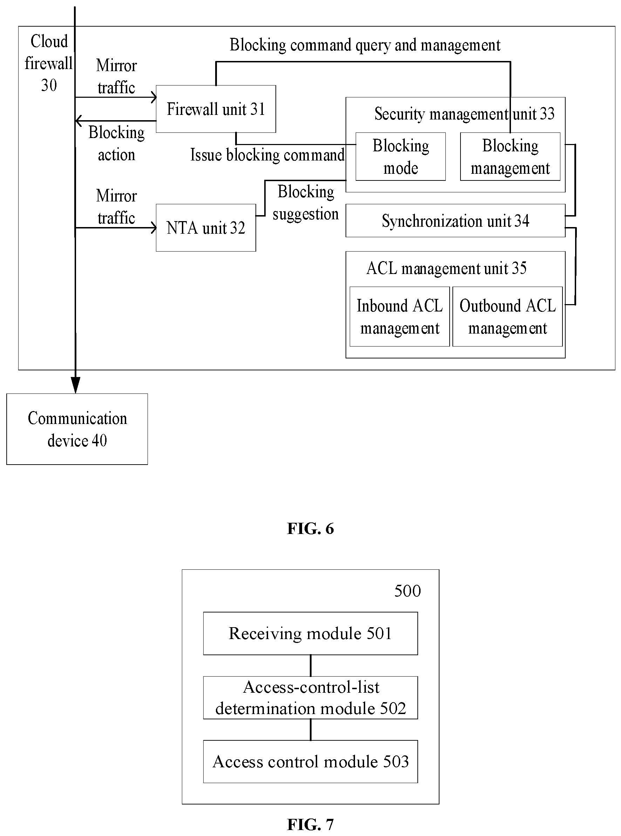

The firewall in embodiments of the present application may be implemented as a cloud firewall. FIG. 6 illustrates an exemplary architecture schematic of a cloud firewall provided in embodiments of the present application. As shown in FIG. 6, a cloud firewall 30 may include a firewall unit 31, a network traffic analysis (NTA) unit 32, a security management unit 33, a synchronization unit 34, and an ACL management unit 35. The security management unit 33 may have blocking mode function and blocking management function. Such two functions may be triggered and executed through the inbound ACL management and outbound ACL management in the ACL management unit 35 which are synchronized by the synchronization unit 34. The inbound direction is the first session direction in above-mentioned embodiments, and the outbound direction is the second session direction in above-mentioned embodiments. The cloud firewall 30 may communicate and interact with a communication device 40 of the user; and data traffic transmitted to the communication device 40 may be mirrored and transmitted to the firewall unit 31 and the NTA unit 32. The firewall unit 31 may perform query and management of the blocking command through the blocking management function in the security management unit 33 and issue the blocking command to the firewall unit 31 through the blocking mode function in the security management unit 33, such that the firewall unit 31 may execute the blocking action. The NTA unit 32 may also provide blocking suggestion to the security management unit 33.

For ease of understanding, the session access control methods in above-mentioned embodiments are exemplarily illustrated below using three specific scenarios where the service port set includes the IP address and the port of the registered communication device which is configured as the server.

For scenario 1, the IP address of the registered communication device of the user A is Cloud_IP_A, and one outgoing IP address of the company of the user A is OA_OUT_IP_A. The session access control for the registered communication device should satisfy the following requirements: (1) all communication device ports may access the website services published on ports 443 and 80 of the IP address Cloud_IP_A of such registered communication device; (2) operation and maintenance operations may be allowed to be only executed on the IP address (Cloud _IP_A) of registered communication device, that is, only IP address OA_OUT_IP_A may be allowed to be configured to access the port 22 of IP address Cloud_IP_A; and (3) since the registered communication device corresponding to the IP address Cloud_IP_A needs to access external services without restriction, external application programming interface (API) services, performing vulnerability audits and the like may be called. To satisfy above-mentioned requirements, the first ACL shown in Table 2 and the second ACL shown in Table 3 can be configured as follows.

**Table 2**

| | | | | | | |
|---|---|---|---|---|---|---|
| First ACL | **No.** | **Source IP Address** | **Source Port** | **Destination IP Address** | **Destination Port** | **Action** |
| | 1 | ANY | ANY | Cloud_IP_A | 80, 443 | Allow access |
| | 2 | OA_OUT_IP_A | ANY | Cloud_IP_A | 22 | Allow access |

**Table 3**

| | | | | | | |
|---|---|---|---|---|---|---|
| Second ACL | **No.** | **Source IP Address** | **Source Port** | **Destination IP Address** | **Destination Port** | **Action** |
| | 3 | Cloud_IP_A | ANY | ANY | ANY | Allow access |

Where, ANY in the IP address represents any IP address, and ANY in the port represents any port; and sequence number 1 corresponds to requirement (1) mentioned above, sequence number 2 corresponds to requirement (2) mentioned above, and sequence number 3 corresponds to requirement (3) mentioned above.

The access request in scenario 1 may be an IP address IP_B, which does not belong to OA_OUT_IP_A, attempts to access the port 22 of Cloud_IP_A. Correspondingly, the access control flow of the TCP communication session may include step a1 to step a3.

In step a1, IP_B may send a SYN packet to the port 22 of Cloud_IP_A through a random port random_b; and based on the SYN packet, the session direction may be directly determined as the first session direction. Therefore, when the firewall detects such SYN packet, by combining Cloud_IP_A being the IP address of the communication device registered, the first ACL may be queried; it may determine the access request is not consistent with any of the allow access rules in the first ACL; and the access request should be rejected, thereby implementing blocking measures.

If the blocking in step a1 fails due to various other reasons, the session direction may be determined again in step a2, and corresponding ACL may be searched to implement blocking measures.

In step a2, the port 22 of Cloud_IP_A may send the SYN+ACK packet to a random port (random_b) of IP_B; and after the firewall detects such packet, since Cloud_IP_A is the registered IP address of the communication device and configured as the server, the firewall may register Cloud_IP_A and the port 22 as the service port, which may be written in the service port set. The SYN+ACK packet may be detected; by combining that Cloud_IP_A is the registered IP address of the communication device, the first ACL may be queried; it may determine that the access request is not consistent with any of the allow access rules in the first ACL; and the access request should be denied, thereby implementing blocking measures.

If the blocking in step a2 fails due to various other reasons, the session direction may be determined again in step a3, and corresponding ACL may be searched to implement blocking measures.

In step a3, the TCP communication session has been established; the firewall may detect each first data packet transmitted between the port 22 of Cloud_IP_A and a random port (random_b) of IP_B; if the port 22 of Cloud_IP_A in the first data packet is in the service port set and Cloud_IP_A is in the registered IP address set, the session direction may be determined to be the first session direction; the first ACL may be queried; it may determine that the access request is not consistent with any allow access rule in the first ACL; and the access request should be denied, thereby implementing blocking measures.

For scenario 2, the first ACL and the second ACL configured in scenario 2 are same as in scenario 1; and the difference is that the access request in scenario 2 is: Cloud_IP_A accesses the service on the port 80 of IP_C, where IP_C is the IP address of the unregistered communication device. Correspondingly, the access control flow of the TCP communication session may include step b1 to step b3.

In step b1, Cloud_IP_A may send the SYN packet to the port 80 of IP_C through a random port (random_a); and based on the SYN packet, the session direction may be directly determined to be the second session direction. Therefore, when the firewall detects such SYN packet, by combining Cloud_IP_A being the IP address of the registered communication device, the second ACL may be queried; it may determine that the access request is consistent with the allow access rule in the second ACL; and the access request should be accepted, thereby allowing the access request.

In step b2, the port 80 of IP_C may send the SYN+ACK packet to the random port (random_a) of Cloud_IP_A; the communication device corresponding to IP_C is the server of the TCP communication session; and the communication device corresponding to IP_C is the unregistered communication device, and the port 80 of IP_C may be not written to the service port set. Meanwhile, the communication device corresponding to Cloud_IP_A is the client of the TCP communication session, such that the session direction may be determined to be the second session direction; the second ACL may be queried; it may determine that the access request is consistent with the allow access rule in the second ACL; and the access request should be accepted, thereby allowing the access request.

In step b3, the TCP communication session has been established; the firewall may detect each first data packet transmitted between the port 80 of IP_C and the random port_a of Cloud_IP_A; the random port_a of Cloud_IP_A and the port 80 of IP_C in the first data packet may be both not in the service port set; the session direction may be determined to be the second direction; the second ACL may be queried; it may determine that the access request is consistent with the allow access rule in the second ACL; and the access request should be accepted, thereby allowing the access request.

For scenario 3, the IP address of the registered communication device of the user is Cloud_IP_A, and the IP address of the registered communication device of the user B is Cloud_IP_B. The session access control for such two registered communication devices should satisfy the following requirements: (1) Cloud_IP_B opens the web service on the port 80; (2) Cloud_IP_A allows itself to access the service on the port 80 of Cloud_IP_B; (3) however, Cloud_IP_B prohibits Cloud_IP_A from accessing the port 80 of Cloud_IP_B. To meet the above-mentioned requirements, the first ACL shown in Table 4 and the second ACL shown in Table 5 can be configured as follows.

**Table 4**

| | | | | | | |
|---|---|---|---|---|---|---|
| First ACL | **No.** | **Source IP Address** | **Source Port** | **Destination IP Address** | **Destination Port** | **Action** |
| | 3 | Cloud_IP_A | ANY | Cloud_IP_B | 80 | Allow access |
| | 1 | ANY | ANY | Cloud_IP_B | 80 | Allow access |

**Table 5**

| | | | | | | |
|---|---|---|---|---|---|---|
| Second ACL | **No.** | **Source IP Address** | **Source Port** | **Destination IP Address** | **Destination Port** | **Action** |
| | 2 | Cloud_IP_A | ANY | Cloud_IP_B | 80 | Allow access |

Where, ANY in the IP address represents any IP address, and ANY in the port represents any port; and sequence number 1 corresponds to requirement (1) mentioned above, sequence number 2 corresponds to requirement (2) mentioned above, and sequence number 3 corresponds to requirement (3) mentioned above.

The access request in scenario 3 may be that Cloud_IP_A accesses port 80 of Cloud_IP_B through a random port random_a. Correspondingly, the access control flow for the TCP communication session may include step c1 to step c3.

In step c1, Cloud_IP_A may send the SYN packet to Cloud_IP_B:80 through a random port random_a; based on the SYN packet, the session direction may be determined to be from Cloud_IP_A to Cloud_IP_B; and both the communication device corresponding to Cloud_IP_A and the communication device corresponding to Cloud_IP_B may be registered communication devices. Therefore, the session direction may include the first session direction and the second session direction; the first ACL and the second ACL may be queried; it may determine that the access request is consistent with the deny access rules in the first ACL and the second ACL; and the access request should be rejected, thereby implementing blocking measures.

If the blocking in step c1 fails due to various other reasons, the session direction may be determined again in step c2, and corresponding ACL may be searched to implement blocking measures.

In step c2, the port 80 of Cloud_IP_B may send a SYN+ACK packet to a random port random_a of Cloud_IP_A; based on the SYN+ACK packet, the session direction may be determined to be from Cloud_IP_A to Cloud_IP_B; Cloud_IP_B may be the server in the TCP communication session; and the port 80 of Cloud_IP_B may be written to the service port set. The communication device corresponding to Cloud_IP_A and the communication device corresponding to Cloud_IP_B may be both registered communication devices. Therefore, the session direction may include the first session direction and the second session direction; the first ACL and the second ACL may be queried; it may determine that the access request is consistent with the deny access rules in the first ACL and the second ACL; and the access request should be rejected, thereby executing blocking measures.

If the blocking in step c2 fails due to various other reasons, the session direction may be determined again in step c3, and corresponding ACL may be searched to implement blocking measures.

In step c3, the TCP communication session has been established; the firewall may detect each first data packet transmitted between the port 80 of Cloud_IP_B and the random port_a of Cloud_IP_A; the port 80 of Cloud_IP_B in the first data packet may be in the service port set; and the communication device corresponding to Cloud_IP_A and the communication device corresponding to Cloud_IP_B may both be registered communication devices. Therefore, the session direction may include the first session direction and the second session direction; the first ACL and the second ACL may be queried; it may determine that the access request is consistent with the deny access rules in the first ACL and the second ACL; and the access request should be denied, thereby executing a blocking measures.

Through above-mentioned scenario examples, it may be seen that the session access control method provided in embodiments of the present application may configure access control rules which are consistent with various scenarios. For example, the configuration of access control rules for the scenario where the communication device with IP address A1 accesses the communication device with IP address A2, but the communication device with IP address A2 are not allowed to access the communication device with IP address A1, such that the access control of the firewall may satisfy actual scenario requirements, which may improve the applicability and accuracy of the session access control of the firewall and ensure the security of the session access control.

The second aspect of the present application provides a session access control apparatus. FIG. 7 illustrates a structural schematic of a session access control apparatus provided in embodiments of the present application. As shown in FIG. 7, a session access control apparatus 500 may include a receiving module 501, an access-control-list determination module 502, and an access control module 503.

The receiving module 501 may be configured to receive the first data packet.

The first data packet may include data packets transmitted after establishing the Transmission Control Protocol (TCP) communication session.

The access-control-list determination module 502 may be configured to determine the preset first access control list (ACL) and/or the preset second ACL as the target ACL based on the network protocol IP address and the port, the service port set, and the registered IP address set in the first data packet.

The service port set may include the IP addresses and ports of registered communication devices which are configured as servers or include the IP addresses and ports of unregistered communication devices which are configured as servers. The server may be the receiver of the TCP communication session. The registered IP address set may include the IP addresses of registered communication devices. The first ACL may correspond to the first session direction of the registered communication device, and the second ACL may correspond to the second session direction of the registered communication device.

The access control module 503 may be configured to execute the access control operation according to the target ACL.

In some embodiments, the access-control-list determination module 502 may be specifically configured to: determine the session direction of the registered communication device in the TCP communication session based on whether the service port set includes the IP address and the port in the first data packet, and whether the registered IP address set includes the IP address in the first data packet; and based on the session direction of the registered communication device in the TCP communication session, determine the first ACL and/or the second ACL as the target ACL.

In some embodiments, the first data packet may include two sets of IP addresses and ports, and the service port set may include the IP addresses and the ports of the registered communication devices configured as the servers. The access-control-list determination module 502 may be specifically configured to: if the service port set includes a set of IP address and port in the first data packet and if the registered IP address set includes the IP address from such set of IP address and port, determine the session direction of the registered communication device in the TCP communication session to include the first session direction; if the service port set does not include any set of IP addresses and ports in the first data packet and if the registered IP address set includes the IP address in a set of IP address and port in the first data packet, determine the session direction of the registered communication device in the TCP communication session to include the second session direction; and if the service port set includes a set of IP address and port in the first data packet and if the registered IP address set includes the IP addresses from two sets of IP addresses and ports in the first data packet, determine the session direction of the registered communication device in the TCP communication session to include both the first session direction and the second session direction.

In some embodiments, the first data packet may include two sets of IP addresses and ports, and the service port set may include the IP addresses and ports of the unregistered communication devices configured as the servers. The access-control-list determination module 502 may be specifically configured to: if the service port set includes a set of IP address and port in the first data packet and if the registered IP address set does not include the IP addresses in such set of IP address and port, determine the session direction of the registered communication device in the TCP communication session to include the second session direction; if the service port set does not include any set of IP addresses and ports in the first data packet and if the registered IP address set includes the IP address in a set of IP address and port in the first data packet, determine the session direction of the registered communication device in the TCP communication session to include the first session direction; and if the service port set does not include any set of IP addresses and ports in the first data packet and if the registered IP address set includes the IP addresses in two sets of IP addresses and ports in the first data packet, determine the session direction of the registered communication device in the TCP communication session to include the first session direction and the second session direction.

In some embodiments, the access-control-list determination module 502 may be specifically configured to: when the session direction of the registered communication device in the TCP communication session includes the first session direction, determine the first ACL as the target ACL; when the session direction of the registered communication device in the TCP communication session includes the second session direction, determine the second ACL as the target ACL; and when the session direction of the registered communication device in the TCP communication session includes the first session direction and the second session direction, determine the first ACL and the second ACL as the target ACL.

In some embodiments, the service port set may include the IP addresses and ports of the registered communication devices configured as the servers.

The receiving module 501 may further be configured to: receive the second data packet before receiving the first data packet, where the second data packet may include the request and confirmation identifier, and the second data packet may include the source IP address and the source port, and the destination IP address and the destination port.

The access control module 503 may further be configured to: if the registered IP address set includes the source IP address in the second data packet, write the source IP address and the source port in the second data packet into the service port set, and execute the access control operation according to the first ACL; and if the registered IP address set includes the destination IP address in the second data packet, execute the access control operation according to the second ACL.

In some embodiments, the access control module 503 may further be configured to: if the registered IP address set includes the destination IP address in the second data packet but not the source IP address and if the service port set includes the destination IP address and the destination port in the second data packet, delete the destination IP address and the destination port in the second data packet from the service port set.

In some embodiments, the service port set may include the IP addresses and ports of unregistered communication devices which are configured as servers.

The receiving module 501 may further be configured to: receive the second data packet before receiving the first data packet, where the second data packet may include the request and confirmation identifier, and the second data packet may include the source IP address and the source port, and the destination IP address and the destination port.

The access-control-list determination module 502 may further be configured to: if the registered IP address set includes the destination IP address in the second data packet but does not include the source IP address, write the source IP address and the source port in the second data packet into the service port set, and execute the access control operation according to the second ACL; if the registered IP address set includes the source IP address in the second data packet but does not include the destination IP address, execute the access control operation according to the first ACL; and if the registered IP address set includes the source IP address and the destination IP address in the second data packet, execute the access control operation according to the first ACL and the second ACL.

In some embodiments, the access-control-list determination module 502 may further be configured to: if the registered IP address set includes the source IP address in the second data packet but does not include the destination IP address and if the service port set includes the destination IP address and the destination port in the second data packet, delete the destination IP address and the destination port in the second data packet from the service port set.

In some embodiments, the receiving module 501 may further be configured to: receive the third data packet before receiving the first data packet, where the third data packet may include the request identifier, and the third data packet may include the source IP address and the source port, and the destination IP address and the destination port.

The access-control-list determination module 502 may further be configured to: if the registered IP address set includes the destination IP address in the third data packet, execute the access control operation according to the first ACL; and if the registered IP address set includes the source IP address in the second data packet, execute the access control operation according to the second ACL.

In some embodiments, the access-control-list determination module 502 may further be configured to: execute the predetermined access control strategy when the session direction of a registered communication device both includes the first session direction and the second session direction.

The predetermined access control strategy may include executing the access control operation according to the first ACL; or executing the access control operation according to the second ACL; or executing the access control operation according to the first ACL and the second ACL.

In some embodiments, the ACL may include the first ACL and/or the second ACL. The access-control-list determination module 502 may further be configured to: when the ACL includes the deny access rules, if the data packet is consistent with any deny access rule, block the TCP communication session which the data packet belongs to; and when the ACL includes the allow access rules, if the data packet is not consistent with any allow access rule, block the TCP communication session which the data packet belongs to. The data packet may include at least one of the first data packet, the second data packet, and the third data packet.

It should be noted that such session access control apparatus 500 may be an apparatus corresponding to above-mentioned session access control method; all implementation manners in above-mentioned method embodiments are applicable to embodiments of such apparatus and may achieve same technical effect.

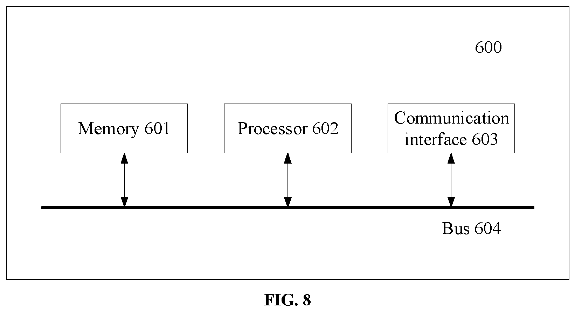

A third aspect of the present application further provides a firewall device. FIG. 8 illustrates a structural schematic of a firewall device provided in embodiments of the present application. As shown in FIG. 8, a firewall device 600 may include a memory 601, a processor 602, and a computer program which is stored in the memory 601 and capable of being executed on the processor 602.

In some embodiments, the processor 602 mentioned above may include a central processing unit (CPU), or an application-specific integrated circuit (ASIC), or one or more integrated circuits configured to implement embodiments of the present application.

The memory 601 may include read-only memory (ROM), random access memory (RAM), disk storage media devices, optical storage media devices, flash memory devices, electrical, optical, or other physical/tangible memory storage devices. Therefore, typically, memory may include one or more tangible (non-transitory) computer-readable storage media (e.g., memory devices) encoded with software including computer-executable instructions; and when the software is executed (e.g., by one or more processors), the software may be configured to perform the operations described with reference to the session access control method according to the embodiments of the present application.

The processor 602 may run a computer program corresponding to executable program code by reading executable program code stored in the memory 601, thereby implementing the session access control method in above-mentioned embodiments.

In some embodiments, the firewall device 600 may further include a communication interface 603 and a bus 604. As shown in FIG. 8, the memory 601, the processor 602, and the communication interface 603 may be connected via the bus 604 to communicate with each other.

The communication interface 603 may be mainly configured to realize communication between various modules, devices, units, and/or equipment in embodiments of the present application. Input devices and/or output devices may also be connected through the communication interface 603.

The bus 604 may include hardware, software or both and couple the components of the firewall device 600 together. For example, not as a limitation, the bus 604 may include an accelerated graphics port (AGP) or other graphics buses, an enhanced industry standard architecture (EISA) bus, a front side bus (FSB), a hyper transport (HT) interconnect, an industry standard architecture (ISA) bus, an infinite bandwidth Interconnect, a low pin count (LPC) bus, a memory bus, a micro channel architecture (MCA) bus, a peripheral component interconnect (PCI) bus, a PCI-express (PCI-E) bus, a serial advanced technology attachment (SATA) bus, a video electronics standards association local bus (VLB), other suitable buses, or a combination of two or more of above buses. Where appropriate, the bus 604 may include one or more buses. Although specific buses are described and illustrated in embodiments of the present application, any suitable buses or interconnects may be considered in the present application.

A fourth aspect of the present application provides a computer-readable storage medium. The computer-readable storage medium may store computer program instructions. When executed by the processor, the computer program instructions may implement the session access control method described in above-mentioned embodiments and achieve same technical effect, which may be not further described in detail herein to avoid repetition. Here, the computer-readable storage medium may include non-transitory computer-readable storage medium, such as a read-only memory (ROM), a random access memory (RAM), a magnetic disk, an optical disk or the like, which may be not limited herein.

A fifth aspect of the present application provides a computer program product. The computer program product may include a computer program. When executed by the processor, the computer program may implement the session access control method described in above-mentioned embodiments and achieves same technical effect, which may be not further described in detail herein to avoid repetition.

It should be noted that all embodiments in present specification are described in a progressive manner; same or similar parts between all embodiments may be referred to each other; and each embodiment focuses on differences from other embodiments. For the apparatus embodiments, the terminal device embodiments, the server embodiments, the system embodiments, the computer-readable storage medium embodiments, and the computer program product embodiments, relevant details refer to the description section of the method embodiments; and method embodiments may also be referenced to each other. The present application is not limited to specific steps and structures described above and illustrated in drawings. Those skilled in the art may make various changes, modifications, and additions, or change the order of the steps, after understanding the spirit of the present application. Furthermore, for the sake of brevity, detailed descriptions of existing methods and technologies are omitted herein.

Aspects of the present application have been described above with reference to flowcharts and/or block diagrams of methods, apparatuses (systems), and computer program products according to embodiments of the present application. It may be understood that each block in the flowcharts and/or block diagrams, and the combinations of blocks in the flowcharts and/or block diagrams, may be implemented by computer program instructions. Such computer program instructions may be provided to a processor of a general-purpose computer, a special-purpose computer, or other programmable data processing device to generate a machine, such that execution of such instructions by the processor of the computer or other programmable data processing device may implement the functions/actions specified in one or more blocks in the flowcharts and/or block diagrams. Such processor may be, but may be not limited to, a general-purpose processor, a special-purpose processor, a special application processor, or a field programmable logic circuit. It should also be understood that each block in the block diagrams and/or flowcharts, and the combinations of blocks in the block diagrams and/or flowcharts, may also be implemented by dedicated hardware that performs specified functions or actions, or by a combination of dedicated hardware and computer instructions.

Those skilled in the art should understand that above-mentioned embodiments are exemplary and non-restrictive. Different technical features presented in different embodiments may be combined to achieve beneficial results. Those skilled in the art should be able to understand and implement other variations of the disclosed embodiments based on the study of the drawings, the specification, and the claims. In the claims, the term "comprise" does not exclude other devices or steps; the quantifier "a" does not exclude multiple; and the terms "first" and "second" are used to identify names rather than to indicate any specific order. Any drawing marks in the claims should not be construed as limiting the protection scope. The functions of multiple parts appearing in the claims may be implemented by a separate hardware or software module. The appearance of certain technical features in different dependent claims does not indicate that such technical features cannot be combined to achieve beneficial effects.

## Claims

1. A session access control method, comprising:
receiving a first data packet, wherein the first data packet includes a data packet transmitted after establishing a transmission control protocol (TCP) communication session;
based on internet protocol (IP) addresses and ports, a service port set, and a registered IP address set in the first data packet, determining a preset first access control list (ACL) and/or a preset second ACL as a target ACL, wherein the service port set includes IP addresses and ports of registered communication devices configured as servers, or includes IP addresses and ports of unregistered communication devices configured as servers; a server is a receiver of the TCP communication session; the registered IP address set includes the IP addresses of the registered communication devices; the first ACL corresponds to a first session direction of a registered communication device; and the second ACL corresponds to a second session direction of the registered communication device; and
executing an access control operation according to the target ACL.

2. The method according to claim 1, wherein based on the internet protocol (IP) addresses and the ports, the service port set, and the registered IP address set in the first data packet, determining the preset first access control list (ACL) and/or the preset second ACL as the target ACL includes:
based on whether the service port set includes the IP addresses and the ports in the first data packet, and whether the registered IP address set includes the IP addresses in the first data packet, determining a session direction of the registered communication device in the TCP communication session; and
based on the session direction of the registered communication device in the TCP communication session, determining the first ACL and/or the second ACL as the target ACL.

3. The method according to claim 2, wherein:
the first data packet includes two sets of IP addresses and ports; and the service port set includes the IP addresses and the ports of the registered communication devices configured as the servers; and
based on whether the service port set includes the IP addresses and the ports in the first data packet, and whether the registered IP address set includes the IP addresses in the first data packet, determining the session direction of the registered communication device in the TCP communication session includes:
if the service port set includes a set of IP address and port in the first data packet, and the registered IP address set includes an IP address in the set of IP address and port, determining the session direction of the registered communication device in the TCP communication session to include the first session direction;
if the service port set does not include any set of IP addresses and ports in the first data packet, and the registered IP address set includes an IP address in a set of IP address and port in the first data packet, determining the session direction of the registered communication device in the TCP communication session to include the second session direction; and
if the service port set includes a set of IP address and port in the first data packet, and the registered IP address set includes IP addresses in two sets of IP addresses and ports in the first data packet, determining the session direction of the registered communication device in the TCP communication session to include the first session direction and the second session direction.

4. The method according to claim 2, wherein:
the first data packet includes two sets of IP addresses and ports; and the service port set includes the IP addresses and the ports of the unregistered communication devices configured as the servers; and
based on whether the service port set includes the IP addresses and the ports in the first data packet, and whether the registered IP address set includes the IP addresses in the first data packet, determining the session direction of the registered communication device in the TCP communication session includes:
if the service port set includes a set of IP address and port in the first data packet, and the registered IP address set does not include an IP address in the set of the IP address and port, determining the session direction of the registered communication device in the TCP communication session to include the second session direction;
if the service port set does not include any set of IP addresses and ports in the first data packet, and the registered IP address set includes an IP address in a set of IP address and port in the first data packet, determining the session direction of the registered communication device in the TCP communication session to include the first session direction; and
if the service port set does not include any set of IP addresses and ports in the first data packet, and the registered IP address set includes IP addresses in two sets of IP addresses and ports in the first data packet, determining the session direction of the registered communication device in the TCP communication session to include the first session direction and the second session direction.

5. The method according to claim 2, wherein based on the session direction of the registered communication device in the TCP communication session, determining the first ACL and/or the second ACL as the target ACL includes:
if the session direction of the registered communication device in the TCP communication session includes the first session direction, determining the first ACL as the target ACL;
if the session direction of the registered communication device in the TCP communication session includes the second session direction, determining the second ACL as the target ACL; and
if the session direction of the registered communication device in the TCP communication session includes the first session direction and the second session direction, determining the first ACL and the second ACL as the target ACL.

6. The method according to claim 1, wherein:
the service port set includes the IP addresses and the ports of the registered communication devices configured as the servers; and
before receiving the first data packet, further includes:
receiving a second data packet, wherein the second data packet includes a request and confirmation identifier, and the second data packet includes a source IP address, a source port, a destination IP address, and a destination port;
if the registered IP address set includes the source IP address in the second data packet, writing the source IP address and the source port in the second data packet into the service port set, and executing the access control operation according to the first ACL; and
if the registered IP address set includes the destination IP address in the second data packet, executing the access control operation according to the second ACL.

7. The method according to claim 6, further including:
if the registered IP address set includes the destination IP address but does not include the source IP address in the second data packet and if the service port set includes the destination IP address and the destination port in the second data packet, deleting the destination IP address and the destination port in the second data packet from the service port set.

8. The method according to claim 1, wherein:
the service port set includes the IP addresses and the ports of the unregistered communication devices configured as the servers; and
before receiving the first data packet, further includes:
receiving a second data packet, wherein the second data packet includes a request and confirmation identifier, and the second data packet includes a source IP address, a source port, a destination IP address, and a destination port;
if the registered IP address set includes the destination IP address but does not include the source IP address in the second data packet, writing the source IP address and the source port in the second data packet into the service port set, and executing the access control operation according to the second ACL;
if the registered IP address set includes the source IP address but does not include the destination IP address in the second data packet, executing the access control operation according to the first ACL; and
if the registered IP address set includes the source IP address and the destination IP address in the second data packet, executing the access control operation according to the first ACL and the second ACL.

9. The method according to claim 8, further including:
if the registered IP address set includes the source IP address but does not include the destination IP address in the second data packet and if the service port set includes the destination IP address and the destination port in the second data packet, deleting the destination IP address and the destination port in the second data packet from the service port set.

10. The method according to claim 1, before receiving the first data packet, further including:
receiving a third data packet, wherein the third data packet includes a request identifier, and the third data packet includes a source IP address, a source port, a destination IP address, and a destination port;
if the registered IP address set includes the destination IP address in the third data packet, executing the access control operation according to the first ACL; and
if the registered IP address set includes the source IP address in the second data packet, executing the access control operation according to the second ACL.

11. The method according to claim 1, further including:
if a session direction of a registered communication device includes both the first session direction and the second session direction, executing a preset access control strategy, wherein:
the preset access control strategy includes:
executing the access control operation according to the first ACL; or
executing the access control operation according to the second ACL; or
executing the access control operation according to the first ACL and the second ACL.

12. The method according to any one of claims 1-11, wherein:
the ACL includes the first ACL and/or the second ACL; and
according to the ACL, executing the access control operation includes:
when the ACL includes deny access rules, if a data packet satisfies any one of the deny access rules, blocking the TCP communication session which the data packet belongs to;
when the ACL includes allow access rules, if the data packet does not satisfy any one of the allow access rules, blocking the TCP communication session which the data packet belongs to; and
the data packet includes at least one of a first data packet, a second data packet, and a third data packet.

13. A session access control apparatus, comprising:
a receiving module, configured to receive a first data packet, wherein the first data packet includes a data packet transmitted after establishing a transmission control protocol (TCP) communication session;
an access-control-list determination module, configured to, based on internet protocol (IP) addresses and ports, a service port set, and a registered IP address set in the first data packet, determine a preset first access control list (ACL) and/or a preset second ACL as a target ACL, wherein the service port set includes IP addresses and ports of registered communication devices configured as servers, or includes IP addresses and ports of unregistered communication devices configured as servers; a server is a receiver of the TCP communication session; the registered IP address set includes the IP addresses of the registered communication devices; the first ACL corresponds to a first session direction of a registered communication device; and the second ACL corresponds to a second session direction of the registered communication device; and
an access control module, configured to execute an access control operation according to the target ACL.

14. A firewall device, comprising:
a processor and a memory storing computer program instructions, wherein:
when executing the computer program instructions, the processor implements the session access control method according to any one of claims 1 to 12.

15. A computer-readable storage medium, wherein the computer-readable storage medium stores computer program instructions; and when executed by a processor, the computer program instructions implement the session access control method according to any one of claims 1 to 12.

16. A computer program product, comprising a computer program, wherein when executed by a processor, the computer program implements the session access control method according to any one of claims 1 to 12.
